# NEUE EUROPÄISCHE PATENTSCHRIFT

(11) **EP 2 666 922 B2**
(45) Veröffentlichungstag und Bekanntmachung des Hinweises auf die Entscheidung über den Einspruch: **27.02.2019**
(45) Hinweis auf die Patenterteilung: 22.07.2015
(21) Anmeldenummer: 12169132.3
(22) Anmeldetag: 23.05.2012
(51) Int. Cl.: E04C 2/06, E04C 5/07

(54) **Textilbewehrtes Betonbauelement**
Textile-reinforced concrete element
Composant en béton avec renfort textile

(43) Veröffentlichungstag der Anmeldung: 27.11.2013
(73) Patentinhaber: Groz-Beckert KG, 72458 Albstadt (DE)
(72) Erfinder: Karle, Roland, 72406 Bisingen (DE); Kromer, Hans, 72474 Winterlingen (DE); Pfaff, Johann, 72474 Winterlingen (DE)
(74) Vertreter: Rüger Abel

(56) Entgegenhaltungen:
- EP-A1- 0 637 658
- EP-A1- 1 215 022
- EP-A2- 0 411 407
- DE-A1- 1 925 762
- DE-A1- 2 603 340
- DE-A1- 3 136 026
- DE-A1- 3 815 246
- DE-A1- 4 135 581
- DE-A1- 10 126 074
- DE-A1- 10 228 406
- DE-A1- 19 609 492
- DE-A1-102010 022 396
- DE-A1-102010 045 428
- DE-C2- 3 437 087
- DE-T2- 3 687 345
- DE-T2- 60 003 066
- DE-T2- 60 007 818
- DE-T2- 69 622 736
- DE-U1- 20 207 945
- DE-U1-202004 008 109
- US-A- 5 836 715
- US-A1- 2002 062 619
- US-A1- 2004 025 465
- <<<N O N - C I T E D D O C U M E N T>>> Online- Ausgabe Magazin "Tudalit" vom Juni 2009, verifiziert via WWW.ARCHIVE.ORG
- <<<N O N - C I T E D D O C U M E N T>>> Online- Ausgabe Magazin "Tudalit" vom Oktober 2010, verifiziert via WWW.ARCHIVE.ORG
- <<<N O N - C I T E D D O C U M E N T>>> Online- Ausgabe Magazin "Tudalit" vom Mai 2011, verifiziert via WWW.ARCHIVE.ORG
- <<<N O N - C I T E D D O C U M E N T>>> Online- Ausgabe Magazin "Tudalit" vom September 2011, verifiziert via WWW.ARCHIVE.ORG
- <<<N O N - C I T E D D O C U M E N T>>> Verifizierung der Veröffentlichung der Online-Magazine "Tudalit" zum 19-08-2011
- <<<N O N - C I T E D D O C U M E N T>>> ZiTex-Forum "Innovatives Bauen mit Textilen und textilbewehrten Werkstoffen" (Dokumentation zur Veranstaltung am 20. Mai 1999 in Krefeld)
- <<<N O N - C I T E D D O C U M E N T>>> FRANK SCHLADITZ: Torsionstragverhalten von textilbetonverstärkten Stahlbetonbauteilen, 2011,
- <<<N O N - C I T E D D O C U M E N T>>> MANFRED CURBACH et al.: "Textilbeton Theorie und Praxis", Tagungsband zum 4. Kolloquium zu textilbewehrten Tragwerken (CTRS4) und zur 1 ., 3 June 2009 (2009-06-03), Dresden
- <<<N O N - C I T E D D O C U M E N T>>> "Textile Bewehrungen zur bautechnischen Verstärkung und Instandsetzung", Arbeits-und Ergebnisbericht für die Periode II/1999 bis I/2002 im Rahmen des SFB 528, December 2001 (2001-12), Dresden
- <<<N O N - C I T E D D O C U M E N T>>> MANFRED CURBACH et al.: "Textilbeton in Theorie und Praxis", Tagungsband zum 6. Kolloquium zu textilbewehrten Tragwerken (CTRS6, 19 September 2011 (2011-09-19), page 528 und 532, XP055275110, Berlin
- <<<N O N - C I T E D D O C U M E N T>>> PROF. DR . PAOLO ERMANNI: "Composites Technologien", Skript zur ETH-Vorlesung 151-0307-00L, Zürich

## Beschreibung

Die Erfindung betrifft ein Betonbauelement mit einer Faser-Bewehrungsstruktur sowie ein Verfahren zur Herstellung einer solchen Faserbewehrungsstruktur.

Betonbauelemente werden in der Praxis mit Bewehrungselementen bzw. Armierungselementen versehen, um die Belastbarkeit des Betonbauteils, insbesondere hinsichtlich Biege- und Zugbeanspruchungen zu erhöhen. Klassischerweise werden zur Bewehrung Eisenstäbe oder Eisengitter eingesetzt. Ein Beispiel dafür zeigt die DE 8903336 U1. Die im Abstand zueinander angeordneten Armierungsstäbe sind durch eine wellenförmige Armierung untereinander verbunden. Zur Verbindung der Armierungsstäbe und der wellenförmigen Armierung können Drahtschlingen vorgesehen sein, wie sie im Betonbau weithin zur Verbindung von Bewehrungsgittern, Bewehrungsstäben und dergleichen Anwendung finden.

Gemäß der DD 256159 A5 ist bereits vorgeschlagen worden, Betonbauelemente mit einem Gitter aus Epoxydharzstäben zu armieren, wobei die Epoxydharzstäbe glasfaserverstärkt sind. Die Epoxydharzstäbe erhalten dabei einen unrunden sichelförmigen oder halbkreisförmigen Querschnitt.

Auch die DD 275008 A1 beschreibt die Bewehrung von mineralisch gebundenen Betonbauelementen mittels nicht metallischer Bewehrungselemente. Es werden zur Bewehrung Seile verwendet, die auf einem netzartigen Flachengebilde angeordnet sind.

Durch ihre leichte Verfügbarkeit und hohe Zugfestigkeit bieten sich Glasfasern als Bewehrungselemente für Betonbauelemente an. Allerdings findet innerhalb eines Glasfaserstrangs, der eine Vielzahl parallel zueinander angeordnete Glasfasern umfasst, nur eine geringe Zuglastübertragung von der Außenoberfläche des Glasfaserstrangs zu im Bündel innen liegenden Glasfasern statt. Zudem zeigt sich, dass von Glasfasersträngen bei bestimmten Belastungen eine Spaltwirkung ausgehen kann, so dass es letztendlich zum Versagen des Bauelements kommt.

Aus der EP 0 637 658 A1 ist ein Betonbauelement gemäß dem Oberbegriff des Anspruchs 1 bekannt mit einem Versteifungsgewebe für Wandsysteme. Das Versteifungsgewebe enthält zumindest in einer Ausführungsform in Doppelsträngen angeordnete Rovings, die durch einen im Wickelfaden zusammengehalten sind.

Weiter offenbart die US 2004/0025465 A1 ein Versteifungsgewebe gemäß Anspruch 1 mit doppelten Fasersträngen.

Davon ausgehend ist es Aufgabe der Erfindung, ein Betonbauelement mit einer Faser-Bewehrungsstruktur zu schaffen, das verbesserte Eigenschaften aufweist.

Das erfindungsgemäße Betonbauelement umfasst eine Faser-Bewehrungsstruktur, deren Faserstränge eine Gitteranordnung mit in einer ersten Richtung orientierten ersten Fasersträngen und in einer zweiten Richtung orientierten zweiten Fasersträngen bilden. Die erste und die zweite Richtung können miteinander einen rechten Winkel, einen spitzen Winkel oder einen stumpfen Winkel einschließen. So kann das Gitter ein Rechteckgitter, ein Rautengitter, ein Dreieckgitter, ein Sechseckgitter oder ähnliches sein. Die Rovings können gerade gestreckt oder auch gewellt oder zick-zack-förmig angeordnet sein. Vorzugsweise sind sie in Richtungen angeordnet, in denen in dem Bauteil Zugkräfte wirken. Die ersten und die zweiten Faserstränge sind untereinander an den Kreuzungspunkten des Gitters verbunden. Die Verbindung kann durch Binden, Kleben, Schweißen, Heften, Verklammern, Vernähen oder jede andere Verbindungsart erbracht werden, die die Faserstränge lagemäßig in Bezug aufeinander wenigstens so lange sichert, bis das Bewehrungsgitter in einem Betonkörper liegt.

Der Betonkörper beinhaltet einen Füllstoff und ein Bindemittel. Der Füllstoff kann ein mineralischer Füllstoff sein und z.B. Kies, Splitt, Schotter, Sand, Schlacken oder dergleichen enthalten. Das Bindemittel kann ein organisches oder, wie es bevorzugt wird, ein mineralisches Bindemittel sein oder enthalten. Dazu gehören Zement, Gips, Kalk, Hochofenschlacke, Flugasche oder dergleichen.

Die Faserstränge sind vorzugsweise sogenannte Rovings, in denen Glasfasern im Wesentlichen parallel zueinander unverzwirnt in Rovingslängsrichtung orientiert angeordnet sind. Die Faserstränge weisen einen Kunststoffanteil auf. Dies bedeutet, dass die einzelnen Glasfasern des Faserstrangs einzeln oder gemeinsam von einer Kunststoffschicht umgeben sind, die eine direkte Berührung zwischen jeder Glasfaser und dem Beton verhindert. Der Kunststoffanteil stellt für die Glasfasern einen Korrosionsschutz dar. Zusätzlich kann er kraftübertragend wirken, um Längskräfte von der Rovingoberfläche auf innenliegende Glasfasern zu übertragen, und als Haftvermittler dienen. Der aus den ersten Fasersträngen und den zweiten Fasersträngen gebildeten Gitteranordnung sind weitere Faserstränge zugeordnet. Diese sind vorzugsweise grundsätzlich ebenso aufgebaut, wie die ersten Faserstränge und die zweiten Faserstränge. Sie sind beispielsweise als Glasfaserrovings ausgebildet, die wiederum mit einem Kunststoffanteil versehen sind.

Für die ersten Faserstränge, die zweiten Faserstränge und die weiteren Faserstränge gilt, dass als Fasermaterial nicht nur die bevorzugten Glasfasern, sondern auch andere anorganische Fasern wie Basaltfasern, Karbonfasern oder dergleichen und auch Kunststofffasern wie zum Beispiel Aramidfasern verwendet werden können. Es können auch Gemische aus den vorgenannten Fasern Anwendung finden.

Die weiteren Faserstränge können parallel und in engster Nachbarschaft zu den ersten Fasersträngen und/oder parallel und in engster Nachbarschaft zu den zweiten Fasersträngen angeordnet werden. Die weiteren Faserstränge können mit den ersten oder zweiten Fasersträngen getrennt angeordnet oder auch zu einem Gesamtquerschnitt verbunden sein. Der Gesamtquerschnitt kann ein Ovalquerschnitt, ein gerundeter Rechteckquerschnitt oder ein sonstiger von der Kreisform abweichender Eckenloser Querschnitt sein. Somit bilden die weiteren Faserstränge mit dem jeweils benachbarten ersten Faserstrang oder zweiten Faserstrang paarweise einen Doppel- oder Mehrfachstab. Wird als Roving für alle Faserstränge beispielsweise ein Roving 3600tex verwendet, kommt auf diese Weise ein Doppelstab mit 7200tex zustande. Es zeigt sich, dass ein solcher Doppelstab einen Bewehrungsstab aus Baustahl ersetzen kann. Insbesondere zeigt sich, dass die Kraftübertragung zwischen den auch im Inneren der jeweiligen Querschnitte des Doppelstabs wegen den Fasern gut ist und eine auf den Beton ausgeübte Sprengwirkung von dem Stab nicht oder jedenfalls nicht im schädlichen Maß ausgeht. Dies gilt entsprechend für Mehrfachstäbe. Zwischen benachbarten Doppel- oder Mehrfachstäben sind vorzugsweise größere Abstände vorgesehen (z.B. 10 bis 50 mm oder auch z.B. 60 mm bis 400 mm), um ein weitmaschiges Bewehrungsgitter zu bilden.

Die weiteren Faserstränge sind mit dem jeweiligen ersten Faserstrang oder dem zweiten Faserstrang, mit dem sie einen Doppel- oder Mehrfachstab bilden, vorzugsweise stoffschlüssig verbunden, insbesondere beispielsweise verklebt oder verschmolzen. Dies eröffnet die Möglichkeit einfacher und sicherer Fertigungsverfahren. Die Verbindung kann sich über die gesamte Länge des Faserstrangs erstrecken oder auch nur vereinzelt gegeben sein.

Die weiteren Faserstränge können wie die ersten Faserstränge und die zweiten Faserstränge als gerade, linienförmige Elemente ausgebildet sein. Alternativ können sie gewellt sein, um eine Verbindung zwischen zwei oder mehreren Gitteranordnungen oben beschriebener Bauart herzustellen. Bilden gewellte Faserstränge einen Abstandshalter, sind sie vorzugsweise knickfrei gewellt. Sie folgen einer möglichst minimal gekrümmten Kurve. Vorzugsweise verlaufen ihre zwischen zwei Bewehrungsebenen hin und her laufenden Stränge in einem spitzen Winkel zu den Ebenen. Dieser ist vorzugsweise kleiner als 45 °.

Die ersten und die zweiten Faserstränge können als Fasergelege ausgebildet sein, das an den Kreuzungspunkten durch den vorhandenen Kunststoffanteil z.B. stoffschlüssig oder auch anderweitig, z.B. durch Bindegarn verbunden ist. Bedarfsweise könne Näh- oder Wirkfäden oder dergleichen vorgesehen sein, um die Rovings, die vorzugsweise zur Ausbildung der ersten Faserstränge und/oder der zweiten Faserstränge verwendet werden, temporär zu fixieren. Es ist auch möglich, die ersten und die zweiten Faserstränge in eine Webbindung zu bringen, also an Kreuzungspunkten über- und untereinander vorbei zu führen.

Es wird bevorzugt, die weiteren Faserstränge parallel zu den ersten Fasersträngen und/oder den zweiten Fasersträngen anzuordnen, um diese zu unterstützen. Prinzipiell können die weiteren Faserstränge jedoch auch in anderen Richtungen angeordnet sein, beispielsweise schräg zu den ersten Fasersträngen und/oder den zweiten Fasersträngen.

Die weiteren Faserstränge sind mit den ersten Fasersträngen und/oder den zweiten Fasersträngen in engem Verbund angeordnet. Sie können dabei längs durchgehend verbunden oder lediglich punktuell oder abschnittsweise verbunden sein und in anderen Abschnitten Spalte freilassen. Jedenfalls wird der so gebildete Doppel-, Dreifach- oder Mehrfachstab mit großer Oberfläche in den Betonkörper eingebettet, ohne auf diesen eine Sprengwirkung auszuüben. Der in dem Doppel- oder Mehrfachstab festgelegte Querschnitt ist zusammenhängend ausgebildet oder auf Einzelquerschnitte aufgeteilt. Er legt somit mindestens einen Durchgang oder alternativ mindestens eine Taille fest.

Bei einer bevorzugten Ausführungsform wird die Faserbewehrungsstruktur durch zwei Gitteranordnungen gebildet, die untereinander fest verbunden sind. Dabei sind die Maschen der beiden Gitteranordnungen zumindest vorzugsweise gleich ausgebildet und zueinander fluchtend ausgerichtet. Dies gilt insbesondre dann, wenn die beiden Gitteranordnungen ohne dazwischen angeordneten Abstandshalter untereinander verbunden sind. Ist hingegen ein Abstandshalter vorhanden, kann es vorteilhaft sein, die Maschenweiten der beiden Gitterstrukturen unterschiedlich festzulegen, beispielsweise, um das Betonbauteil hinsichtlich der auftretenden Biegebelastungen zu optimieren.

Der Abstandshalter kann durch ein Abstandshaltergitter gebildet sein, das zum Beispiel mit einer der Gitteranordnungen (oder auch mit beiden) übereinstimmend ausgebildet und dann in eine räumliche Form überführt worden ist. Die räumliche Form kann beispielsweise eine Wellenform sein.

Für alle Faserstränge gilt, dass diese vorzugsweise durch kunststoffbewehrte Rovings gebildet sind, die bei Zimmer- und Umgebungstemperatur keine nennenswerte Klebrigkeit aufweisen und somit ohne besondere Vorsichtsmaßnahme handhabungsfähig sind. Vorzugsweise wird der Kunststoffanteil durch einen Kunststoff, wie bspw. ein thermisch aktivierbares Epoxydharz, gebildet, das bei Erwärmung auf bspw. 75°C bis 80°C plastisch wird und sich durch Vernetzung in eine duroplastische Form überführt. Eine stärkere Erwärmung (z.B. auf bis zu 150°C) führt zu schnellerem Aushärten. Es handelt sich dabei um sogenannte Prepregs. Sind Faserstränge in Gestalt solcher Prepregs vorhanden und ist aus solchen Fasersträngen das Abstandshaltergitter erzeugt, hat dieses zunächst eine ausreichende Steifigkeit, um mit einem weiteren ähnlichen oder gleichen Gitter übereinander gelegt zu werden. Durch gemeinsame Erwärmung plastifiziert der Kunststoffanteil. Die Gitteranordnungen verkleben und härten im verklebten Zustand aus.

Aus einer solchen noch nicht vollends durchgehärteten Gitteranordnung kann auch der Abstandshalter erzeugt werden. Die vorgeformte Gitteranordnung wird dazu in eine Formgebungsvorrichtung, beispielsweise mit gegeneinander verschiebbaren Stangenrosten eingelegt und unter Wärmeeinwirkung in die gewünschte Form überführt. Gleichzeitig können ebenfalls thermisch aktivierte Gitteranordnungen zu beiden Seiten der wellenförmigen Anordnung angelegt werden, um mit dieser zu verkleben und die räumliche Bewehrungsstruktur zu bilden.

Die vorgenannten Einzelmerkmale und Vorteile sind unabhängig voneinander mit den Gegenständen der Ansprüche 1 und/oder 12 kombinierbar. Sie erbringen jeweils spezifische Vorteile, die an ein und demselben Produkt oder Verfahren auch einzeln der gruppenweise kumulativ verwirklicht sein können. Die nachfolgende Beschreibung gibt einige Beispiele und Hinweise zur möglichen Ausführung der Erfindung ohne den schon durch die Ansprüche definierten Schutzbereich darauf zu beschränken. Das Fachwissen des Durchschnittsfachmanns tritt hinzu und ist beim Studium der Beschreibung und der Zeichnungen zugrunde zu legen. Es zeigen:
Figur 1 ein Betonbauelement, in geschnittener ausschnittsweiser Prinzipdarstellung mit einer Faser-Bewehrungsstruktur,
Figur 2 und 3 alternative Faserbewehrungsstrukturen für das Betonbauelement nach Figur 1,
Figur 4 bis 9 verschiedene Querschnitte der Faserbewehrungsstrukturen nach Figur 1 bis 3,
Figur 10 eine alternative Faserbewehrungsstruktur mit Doppelstab in geschnittener Seitenansicht,
Figur 11 eine weitere alternative Faserbewehrungsstruktur mit Doppelstäben in geschnittener Perspektive,
Figur 12 bis 15 verschiedene beispielhafte Querschnittsformen von Doppel- oder Mehrfachstabstrukturen,
Figur 16 ein Betonbauelement mit räumlicher Faserbewehrungsstruktur, in ausschnittsweiser Querschnittsdarstellung,
Figur 17 die räumliche Bewehrungsstruktur des Betonbauelements nach Figur 16, in ausschnittsweiser schematisierter Perspektivdarstellung,
Figur 18 ein Verfahren zur Herstellung der räumlichen Bewehrungsstruktur, in schematisierter Darstellung,
Figur 19 eine räumliche Bewehrungsstruktur in ausschnittsweiser schematisierter Perspektivdarstellung,
Figur 20 und 21 dreidimensionale Bewehrungsstrukturen mit Doppelstäben,
Figur 22 bis 25 räumlich geschlossene Bewehrungsstrukturen, und
Figur 26 eine Winkel-Bewehrungsstruktur in schematisierter Darstellung.

Das erfindungsgemäße Betonbauelement kann je nach Form der Bewehrung als ebenes oder räumliches Betonbauelement ausgebildet sein. Nachfolgend wird die Erfindung am Beispiel eines ebenen Betonbauelements 10 erläutert. Es wird jedoch darauf hingewiesen, dass die nachstehend erläuterten Einzelheiten jeweils auch an räumlichen Betonbauelementen Anwendung finden können, sofern dies nicht explizit ausgeschlossen ist.

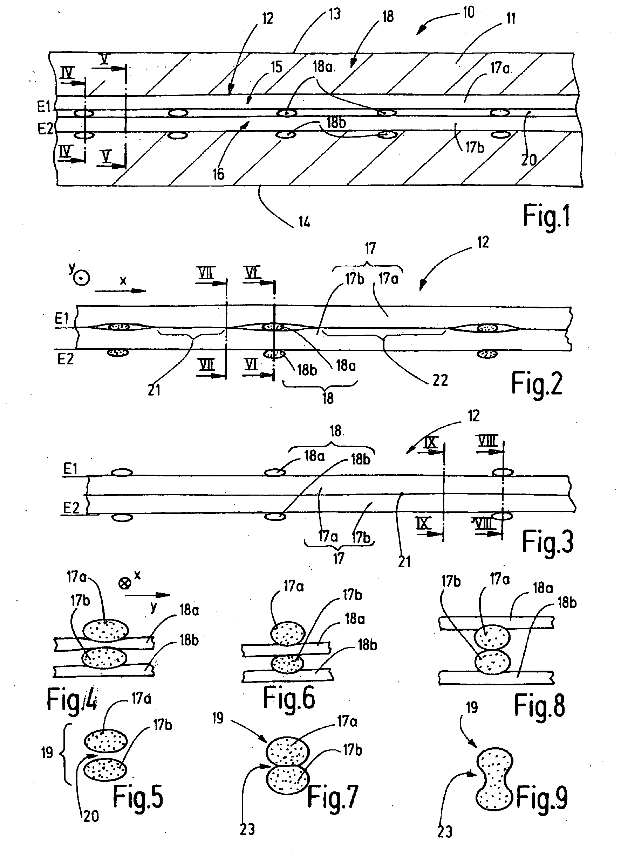

Das Betonbauelement 10 weist gemäß Figur 1 einen Betonkörper 11 auf, in den eine Faser-Bewehrungsstruktur 12 eingebettet ist. Dies ist zum Beispiel mittig zwischen zwei Außenflächen 13, 14 des Betonkörpers 11 angeordnet. Die Faser-Bewehrungsstruktur 12 folgt der Form der Außenflächen 13, 14 und ist, falls diese eben sind, ebenfalls eben. Auf beiden Seiten der Faser-Bewehrungsstruktur 12 ist eine Betonüberdeckung von vorzugsweise mehr als 10 mm, beispielsweise 30 mm vorhanden. Der Betonkörper 11 ist ein Mineralbeton, vorzugsweise bestehend aus einem zementgebundenen Kies. Die Korngröße kann beispielsweise bei 4 mm bis 16 mm liegen. Diese Faser-Bewehrungsstruktur 12 bildet eine Gitteranordnung 15 (ähnlich Figur 1, mit einer Maschenweite, die vorzugsweise dem mehrfachen der Korngröße des Betons entspricht). Im vorliegenden Ausführungsbeispiel kann die Maschenweite beispielsweise 25 mm betragen.

Die Faser-Bewehrungsstruktur 12 umfasst im vorliegenden Ausführungsbeispiel eine obere Gitteranordnung 15 und eine untere Gitteranordnung 16. Diese sind mit deckungsgleichen Maschen versehen und stoffschlüssig untereinander verbunden. Vorzugsweise sind die Gitteranordnungen 15, 16 untereinander gleich aufgebaut. Die nachfolgende Beschreibung der Gitteranordnung 15 gilt deswegen entsprechend für die Gitteranordnung 16.

Die Gitteranordnung 15 weist erste Faserstränge 17a und zweite Faserstränge 18a auf. Die ersten Faserstränge 17a legen eine erste Richtung (X-Richtung) fest. Die zweiten Faserstränge 18a sind quer dazu, beispielsweise in einem spitzen oder in einem rechten Winkel in einer zweiten Richtung (Y-Richtung) angeordnet. Die ersten Faserstränge 17a sind untereinander vorzugsweise äquidistant angeordnet. Die zweiten Faserstränge 18a sind untereinander ebenfalls vorzugsweise in festen einheitlichen Abständen angeordnet. Die ausgebildeten Maschen sind vorzugsweise viereckig, zum Beispiel rechteckig oder quadratisch ausgebildet. Nach den vorgenannten Regeln lassen sich jedoch auch Dreieckgitter oder ähnliche Gitteranordnungen (Rautenanordnung und dergleichen) erstellen.

Die ersten Faserstränge 17a und die zweiten Faserstränge 18a sind vorzugsweise als Rovings mit 1200tex, 2400tex oder vorzugsweise 3600tex ausgebildet. Sie umfassen jeweils eine große Anzahl von Glasfilamenten aus alkaliresistentem Glas. Die Glasfasern der Rovings sind mit einer Kunststoffimprägnierung versehen, die vorzugsweise thermisch aushärtbar ist. Die miteinander unverwobenen ersten Faserstränge 17a und zweiten Faserstränge 18a bilden zunächst ein gitterförmiges Gelege, wobei der durch die Kunststoffimprägnierung vorhandene Kunststoff an den Kreuzungspunkten durch seine Klebewirkung eine Verbindung herstellt.

Die Anzahl der Glasfasern in den Rovings für die erster Faserstränge 17a kann mit der Anzahl der Glasfasern in den Rovings der zweiten Faserstränge übereinstimmen oder von dieser verschieden sein. Auf diese Weise können die Zugfestigkeiten der Faserbewehrungsstruktur 12 in X-Richtung und in Y-Richtung jeweils zweckentsprechend festgelegt und eingestellt werden.

Die vorstehende Beschreibung der Gitteranordnung 15 gilt für die Gitteranordnung 16 mit dem Unterschied, dass anstelle der Buchstabenindice "a" der Buchstabenindex "b" zu lesen ist.

Die Faserbewehrungsstruktur 12 besteht aus den beiden Gitteranordnungen 15, 16, die zunächst separat bereitgestellt worden sind, wobei der Kunststoff der zweiten Faserstränge 18a, 18b und/oder der ersten Faserstränge 17a, 17b zumindest noch nicht vollständig vernetzt und thermisch aktivierbar geblieben ist. Die insoweit halbfertig vorbereiteten Gitteranordnungen 15, 16 werden in diesem Zustand übereinander gelegt und mit fluchtenden Maschen ausgerichtet. Durch vorherige oder nun erfolgende Erwärmung wird die Kunststoffimprägnierung einerseits plastifiziert und somit klebrig sowie andererseits der Vernetzungsprozess eingeleitet. Es entsteht die duroplastische Faserbewehrungsstruktur 12 mit großen Maschen und den Querschnitten gemäß Figur 4 und Figur 5. Die Lage der Querschnitte ist in Figur 1 mit den Schnittlinien IV bzw. V-V veranschaulicht. Wie sich aus Figur 4 (Schnitt IV_IV) ergibt, liegen die Kreuzungspunkte der zweiten Faserstränge 18(a, b) und der ersten Faserstränge 17(a, b) rechtwinklig zu der X-Y-Ebene übereinander. An den Gitterpunkten ist eine Verklebung der Gitteranordnung 15, 16 vorhanden. Außerhalb der Gitterpunkte weisen die ersten Faserstränge 17a gemäß Figur 5 insgesamt einen gerundeten Querschnitt auf. Zwischen den beiden zusammengehörigen ersten Fasersträngen 17a, 17b, die in der Faser-Bewehrungsstruktur 12 gewissermaßen einen Doppelstab 19 bilden, ist ein geringer Spalt 20 vorhanden, der vom Feinanteil des Betons gefüllt werden kann. Ein solcher Spalt kann eine Weite von z.B. weniger als einem oder auch einigen Millimetern haben. Er ist jedenfalls kleiner als der Abstand zwischen verschiedenen Doppelstäben 19.

Zur Herstellung des Betonbauelements 10 wird die, wie vorstehend beschrieben bereitgestellte Faser-Bewehrungsstruktur 12 in verarbeitungsfähigen Beton eingelegt und positioniert. Es kann aufgrund seiner Steifigkeit wie eine Baustahlmatte in den Beton eingearbeitet werden und verbleibt in diesem. Aufgrund der erforderlichen niedrigen Betonüberdeckung lassen sich auf diese Weise relativ leichtgewichtige, sehr steife, hochbelastbare und korrosionssichere Bauelemente aus Beton bereitstellen. Außerdem lassen sich Formteile fertigen. Z.B. kann die Bewehrungsstruktur in eine gewünschte Form eingelegt und elastisch oder (z.B. durch Wärme) plastisch an diese angepasst werden, bevor Beton in die Form gefüllt wird.

An dem vorstehend beschriebenen Ausführungsbeispiel sind zahlreiche Abwandlungen möglich. Diese betreffen insbesondere die Faser-Bewehrungsstruktur 12. Eine erste Abwandlung zeigt Figur 2. Während die ersten Faserstränge 17a, 17b nach Figur 1 und 5 einen Spalt 20 zwischen einander festlegen können, ist es auch möglich, die ersten Faserstränge 17 auf ganzer Länge oder wie in Figur 2 gezeigt auf Teillängen 21, 22 miteinander zu verkleben. Die zugehörigen Querschnittstrukturen zeigen die Figuren 6 und 7. Anstelle des Spalts 20 ist zumindest stellenweise lediglich noch eine Taille 23 vorhanden. Der entstandene Doppelstab 19 hat jedoch eine deutlich größere Oberfläche als ein Einzelstab mit gleicher Glasfilamentezahl, wodurch seine Lasttragfähigkeit verbessert ist.

Es wird darauf hingewiesen, dass bei dem Ausführungsbeispiel nach Figur 1 in Abwandlung der dargestellten Ausführungsform die zweiten Faserstränge 18a, 18b auch beide in die Mittelebene zwischen die ersten Faserstränge 17 gelegt werden können. Sie können dort übereinander oder auch nebeneinander angeordnet sein. Letzteres würde dazu führen, dass die ersten Faserstränge 17a, 17b eine stehende "8" bilden. Während die dazwischen angeordneten zweiten Faserstränge 18a, 18b eine liegende "8" bilden. Sind die zweiten Faserstränge 17a, 17b dabei voneinander etwas distanziert können sie miteinander auch einen Spalt festlegen.

Figur 3 veranschaulicht eine weitere Ausführungsform der Faserbewehrungsstruktur 12. Diese unterscheidet sich von den vorstehenden Faserbewehrungsstrukturen durch die Anordnung der zweiten Faserstränge 18a, 18b, die hier an der Oberseite und der Unterseite der Faserbewehrungsstruktur 12 angeordnet sind. Dadurch ergeben sich die in Figur 8 und 9 veranschaulichten Querschnitte. Im Übrigen wird auf die vorige Beschreibung verwiesen, die entsprechend gilt. Insbesondere können die ersten Faserstränge 17a, 17b auf ganzer Länge miteinander verbunden sein. Es können auch einzelne unverbundene Bereiche vorhanden sein. Der Doppelstab 19 weist hier lediglich noch eine geringe Taille 23 auf. Aufgrund seiner Abrundung an der oberen und unteren Seite geht von ihm jedoch, anders als bei im Querschnitt lanzettförmigen oder sichelförmigen Rovings keine Sprengwirkung auf den Betonkörper aus.

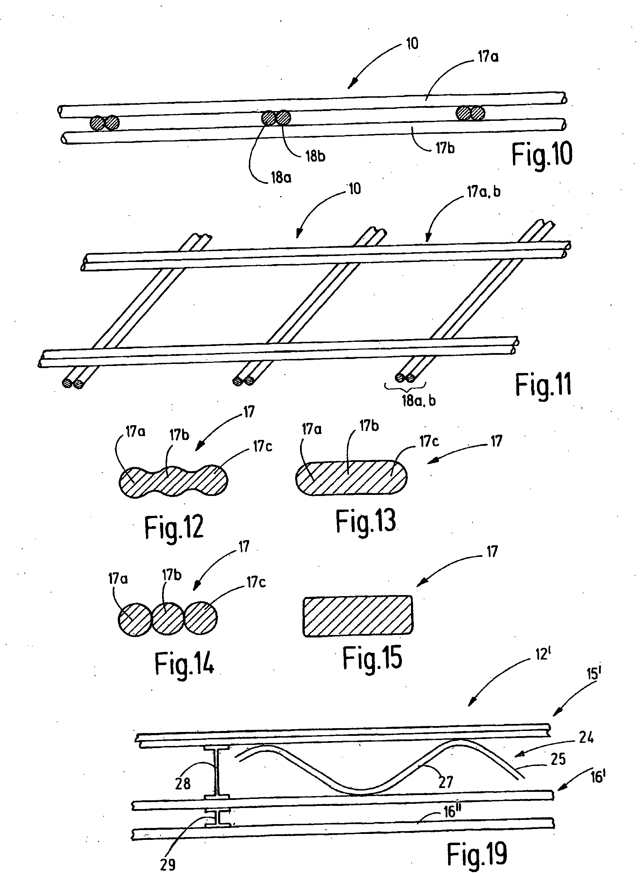

Weitere Faserbewehrungsstrukturen 12 sind in Figur 10 und in Figur 11 veranschaulicht. Die Figuren zeigen weitere Möglichkeiten der Anordnung oder Ausbildung von Doppelstabanordnungen. In Figur 10 sind die ersten Faserstränge 17a, 17b als Einfachstäbe ausgebildet, während die zweiten Faserstränge 18a, 18b wie dargestellt so eng beieinander liegen, dass sie einen Doppelstab bilden. Sie können mit geringem Spalt nebeneinander oder auch ineinander übergehend angeordnet sein. Figur 11 veranschaulicht ein Ausführungsbeispiel, bei dem sowohl die ersten Faserstränge 17a, b, wie auch die zweiten Faserstränge 18a, b als Doppel- oder Mehrfachstäbe ausgebildet sind. Hinsichtlich der Querschnitte der Doppel- oder Mehrfachstäbe wird im Zusammenhang mit allen vor- und nachstehend beschriebenen Ausführungsformen auf die Figuren 12 bis 15 verwiesen. Die Figuren erläutern dies jeweils am Beispiel der ersten Faserstränge 17, wobei sie gleichermaßen für die zweiten Faserstränge 18 gelten. Nach Figur 12 kann jeder erste Faserstrang 17 durch mehrere jeweils für sich ungefähr kreisförmige erste Faserstränge 17a, 17b, 17c gebildet sein, die so ineinander übergehen, dass der Querschnitt ausgehend von in Figur 12 links und rechts ersichtlichen gerundeten, bogenförmigen Schmalseiten gewellte Flanken vorhanden sind. Diese können, wie Figur 13 zeigt, auch im Wesentlichen gerade sein. Figur 14 veranschaulicht, dass die Einzelquerschnitte der einzelnen Faserstränge 17a, 17b, 17c auch durch einen geringen Spalt (der auch die Weite Null haben kann) voneinander getrennt sein können.

Ausgehend von dem Querschnitt nach Figur 13 kann der Faserstrang 17 auch einem Rechteckquerschnitt angenähert sein, wobei auch dieser jede scharfe Ecke vermeidet, sondern vielmehr gerundete Ecken aufweist. Jedenfalls aber werden, auch wenn der Rundungsradius gering ist, Keilwirkungen des Querschnitts dadurch vermieden, dass keine Eckenwinkel von weniger als 90° vorhanden sind.

Auf Basis der vorstehend beschriebenen Ausführungsformen lassen sich auch Faser-Bewehrungsstrukturen aufbauen, die mehr als zwei Gitteranordnungen umfassen. Die noch nicht ausgehärteten jedoch steifen einzelnen Gitteranordnungen werden dann in entsprechender Anzahl übereinander liegend angeordnet und beispielsweise durch Wärme miteinander verbunden und endgültig ausgehärtet. Es wird darauf hingewiesen, dass bei allen vor- und nachstehend beschriebenen Ausführungsformen auch andere stoffschlüssige Verbindungsverfahren zur Anwendung kommen können, beispielsweise das Aufsprühen von Klebstoffemulsionen und dergleichen.

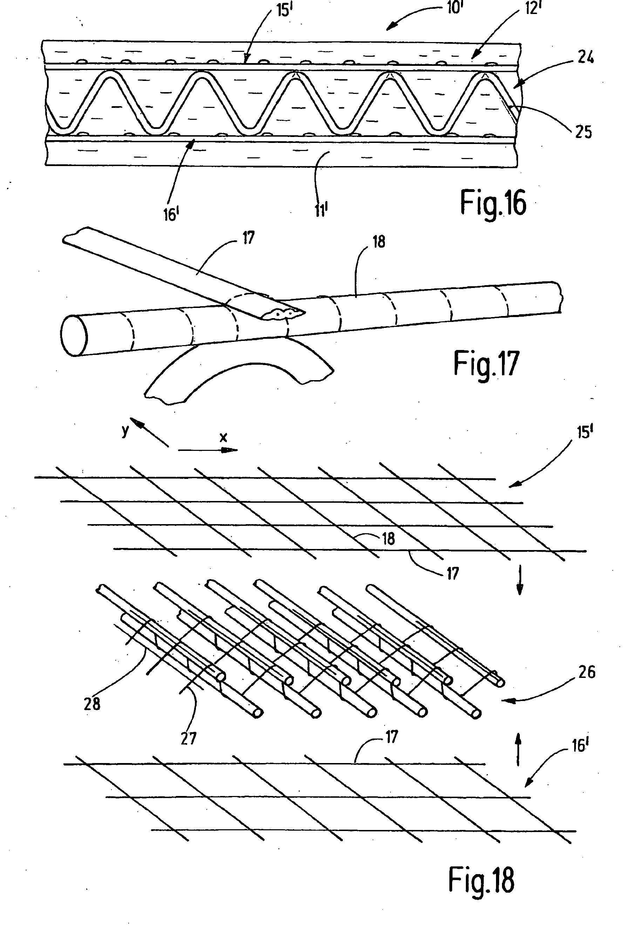

Die vorstehend beschriebenen Ausführungsformen der Faser-Bewehrungsstruktur 12 sind flächige Bewehrungsstrukturen, die vorzugsweise eben oder auch in anderen Formen, zum Beispiel abgewinkelt, schalenförmig, sphärisch gewölbt oder mehrfach gekrümmt ausgebildet sein können. Solche Bewehrungsstrukturen werden als zweidimensional verstanden, weil sie von einer Flächenstruktur abgeleitet sind. Dagegen zeigt Figur 16 ein Betonbauelement 10' mit dreidimensionaler Faser-Bewehrungsstruktur 12'. Diese umfasst wiederum zwei Gitteranordnungen 15', 16', die wie dargestellt als Einfachgitter oder als Doppel- oder Mehrfachgitter gemäß einer der zuvor beschriebenen Ausführungsformen der Faserbewehrungsstrukturen 12 ausgebildet sein können. In den Figuren 10 bis 12 sind sie lediglich der einfacheren Veranschaulichung wegen als Einfachgitterstrukturen dargestellt. Jedoch werden Doppel- oder Mehrfachgitterstrukturen wegen der erzielbaren höheren Gesamtquerschnitte der jeweiligen Doppelstäbe 19 bevorzugt.

Hinsichtlich der ersten Faserstränge 17(a, b), 18(a, b) deren Ausbildung, Anordnung und Verarbeitung wird auf die vorstehende Beschreibung verwiesen. Nachfolgend werden Einzelstränge wie auch Doppelfaserstränge 17, 18 ohne Buchstabenindice in Bezug genommen.

Wie aus den Figuren 16 und 17 hervorgeht, ist zwischen den Gitteranordnungen 15', 16' eine Abstandshalteranordnung 24 angeordnet. Diese wird durch eine Gitteranordnung 25 gebildet, die zum Beispiel eine Wellenform haben kann. Die Gitteranordnung 25 kann beispielsweise aus einer ebenen Gitteranordnung ähnlich der Gitteranordnung 15 oder 16 erzeugt werden, indem sie von einer aus einzelnen Stangen bestehenden Form 26 in ebenem Zustand aufgenommen und dann durch gruppenweise Relativbewegung der Stangen gegeneinander in die Wellenform überführt und in dieser fixiert wird. Wie Figur 18 zeigt, werden die Gitteranordnungen 15', 16' dann auf diese wellenförmige Gitteranordnung 25 aufgelegt und mit dieser stoffschlüssig verbunden. Dies kann wiederum thermisch oder auch durch Aufbringen eines Klebemittels einer Klebeemulsion oder dergleichen erfolgen.

Die Gitteranordnung 25 umfasst Faserstränge 27, die sich vorzugsweise entlang der ersten Faserstränge 17 erstrecken sowie Faserstränge 28, die sich vorzugsweise parallel zu den zweiten Fasersträngen 18 erstrecken.

Die beiden Ausführungsformen der Faserbewehrungsstrukturen 12, 12' haben gemeinsam, dass einem ersten Faserstrang 17 in einer Gitterstruktur 15 oder 15' ein weiterer Faserstrang 17 zugeordnet ist, der zu einer anderen Gitteranordnung 16 oder 16' gehört, wobei der erste Faserstrang 17 der einen Gitteranordnung 15 und der weitere Faserstrang 17 der anderen Gitteranordnung 16 untereinander verbunden sind. Die Verbindung kann unter den Fasersträngen 17 an den Stellen 21, 22 über ganze Länge oder über Teillängen durchgehend erfolgen (Figur 2 und Figur 3) oder lediglich über die ersten Faserstränge 18 gegeben sein (Figur 1) oder durch die Abstandshalteranordnung 24 vermittelt werden (Figur 16 bis 18). Bevorzugterweise ist eine flächenhafte Bewehrung nach Figur 1 bis 9 in erster Richtung (X) und/oder in zweiter Richtung (Y) als Doppelstab entsprechend dem Doppelstab 19 nach Figur 5, 7 oder 9 ausgebildet. Dies gilt auch für die Gitteranordnungen 15', 16' nach Figur 16.

Mit der vorgestellten Faser-Bewehrungsstruktur 12 oder 12' lassen sich Bewehrungskörper erstellen, die ähnlich wie Baustahlmatten in Beton verarbeitbar sind. Bei der Erstellung von Ortbetonbauwerken sind die Faser-Bewehrungsstrukturen 12' insbesondere dann begehbar und mindestens ebenso tragfähig wie Stahlbewehrungen, wenn die ersten Faserstränge 18 und/oder die zweiten Faserstränge 17 als Doppel- oder Mehrfachstäbe mit oder ohne stoffliche Verbindung zwischen den Teilquerschnitten ausgebildet sind.

Das erfindungsgemäße Verfahren zur Bereitstellung einer Faser-Bewehrungsstruktur lässt sich in folgenden Verfahrensschritten zusammenfassen:
1. Bereitstellen von Fasersträngen mit einer Kunststoffimprägnierung,
2. Anordnen eines Teils der Faserstränge in einer x-Richtung als erste Faserstränge(17),
3. Anordnen eines anderen Teils der Faserstränge in einer y-Richtung schräg oder quer zu den ersten Fasersträngen (17) auf diesen, um durch kreuzweises Aufeinanderlegen oder Herstellung einer Webbindung eine ebene Gitterstruktur (15) zu bilden,
4. Teilhärten der Kunststoffimprägnierung zur Ausbildung einer steifen, handhabbaren Gitterstruktur (15, 15'), wobei das Teilhärten durch Lufthärten, Lufttrocknen oder dergleichen durchgeführt werden kann,
5. Erzeugung weiterer Gitterstrukturen (16, 16') mittels der vorstehenden Schritte,
6. Übereinanderlegen bzw. Aufeinanderlegen von mindestens zwei solcher Gitterstrukturen (15, 16; 15', 16'),
7. Ausrichten der Gitterstrukturen (15, 16; 15', 16') zueinander,
8. vorzugsweise stoffliches Verbinden der Gitterstrukturen (15, 16; 15', 16') miteinander.

Die obigen Schritte beschreiben die Ausbildung eines erfindungsgemäßen Bewehrungsgitters aus zwei Einzelgittern. Eine Alternative besteht in der unmittelbaren Ausbildung eines Gitters mit Doppel- oder Mehrfachstäben. Kennzeichen solcher Doppel- oder Mehrfachstäbe ist jeweils ein von der Kreisform abweichender Querschnitt, der aber frei von ungerundeten Kanten ist.

Eine weitere räumliche Bewehrungsstruktur 12' zeigt Figur 19. Ähnlich wie die Bewehrungsstruktur nach Figur 16 und 17 kann diese wiederum zwei Gitteranordnungen 15', 16' aufweisen, von denen mindestens eine in mindestens einer Richtung (x oder y) Bewehrungsstäbe umfasst, die als Doppelstabanordnungen nach einer der vorstehend genannten Varianten ausgebildet sind. Zwischen beiden Gitteranordnungen 15', 16' ist ein Abstandhalter vorgesehen, der wie vorstehend durch eine Gitteranordnung 25 gebildet sein kann. Diese ist vorzugsweise sanft gewellt, so dass die zwischen den Gitteranordnungen 15', 16' hin und her laufenden Abschnitte 27 etwa S-förmig gekrümmt sind.

Alternativ oder ergänzend können zum Beispiel aus Kunststoffspritzteilen gebildete Abstandshalter 28 vorgesehen sein, die die beiden Gitteranordnungen 15', 16' auf Abstand halten. Die Abstandshalter 28 können mit den Gitteranordnungen 15', 16' verbunden sein oder auch lediglich zwischen diese gestellt sein.

Es kann eine weitere Gitteranordnung 16" vorgesehen sein, die zum Beispiel mit der Gitteranordnung 16' über Abstandshalter 29 verbunden ist.

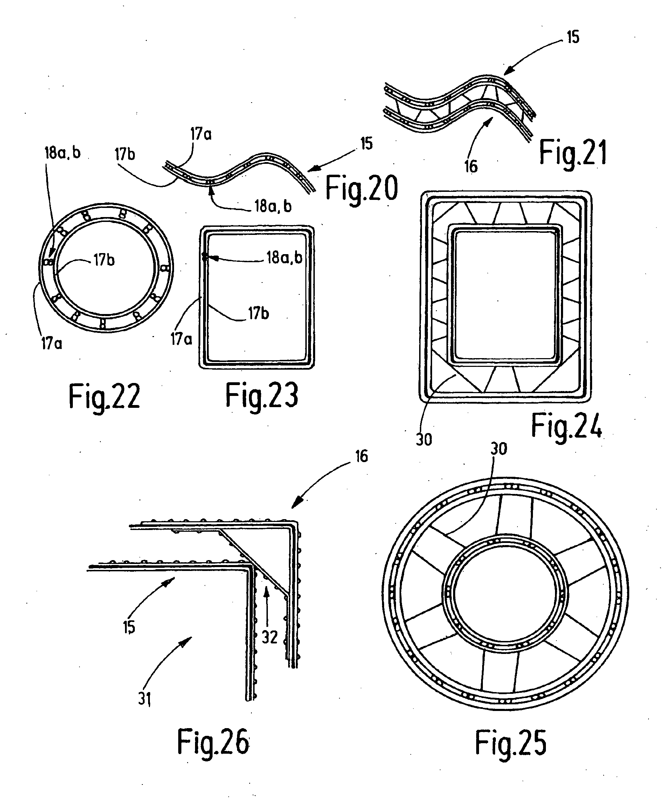

Weitere Bewehrungsgitteranordnungen mit stehend oder liegend angeordneten Doppelstabanordnungen sind den Figuren 20 bis 26 zu entnehmen. In Figur 20 ist eine Gitteranordnung 15 veranschaulicht, die eine räumliche Form aufweist. Die ersten Faserstränge 17a, 17b bilden eine Doppelstabanordnung. Zwischen ihnen liegt die von den Fasersträngen 18a, 18b gebildete Doppelstabanordnung.

Wie Figur 21 zeigt, kann eine solche Gitteranordnung 15 mit einer entsprechend ausgebildeten Gitteranordnung 16 kombiniert werden, zwischen denen dann wiederum geeignete Abstandshalter angeordnet sind. Die Abstandshalter können wieder einfache oder doppelte Bewehrungsstäbe, Abstandshalter (wie 28 oder 29 in Figur 19 oder dergleichen sein).

Wegen der lediglich geringen erforderlichen Betonüberdeckung und der guten Verformbarkeit der im noch nicht voll ausgehärteten Zustand zunächst noch thermoplastischen Kunststoffanteile der Faserstränge lassen sich elegante dreidimensionale Formen schaffen.

Die Figuren 22 bis 25 veranschaulichen räumlich geschlossene Formen der Gitteranordnungen, wie sie beispielsweise für Betonbalken, Betonsäulen oder dergleichen Anwendung finden können. Sie können, wie ersichtlich, Kreisformen, Rechteckformen oder sonstigen Formen folgen. Der Abstand zwischen innerer und äußerer Lage, die hier durch die Faserstränge 17a, 17b gebildet werden, können die Faseranordnungen 18a, 18b als stehender oder liegender Doppelstab angeordnet werden. Figur 24 und 25 veranschaulicht, dass jeweils zwei oder mehrere solcher Strukturen durch Abstandshalter 30 eine in Radialrichtung räumlich ausgedehnte Bewehrungsstruktur bilden können. Die Abstandshalter 30 können nach jeder der vorstehend beschriebenen Bauarten ausgebildet sein.

Figur 26 veranschaulicht die Nutzung von Doppelstab-Gitteranordnungen nach vorstehend beschriebenem Muster als Eckbewehrungsteil 31. Es umfasst zwei oder mehrere Gitteranordnungen 15, 16, die hier eine entsprechende Vorform, beispielsweise Winkelform erhalten haben. Jede der Gitteranordnungen 15, 16 kann nach jeder der vorstehend, insbesondere im Zusammenhang mit den Figuren 2 bis 9 sowie 10 bis 15 erläuterten Bauformen sein bzw. die dort dargestellten Doppelstabquerschnitte nutzen. Im Eckbereich kann die Verbindung zwischen den beiden Gitteranordnungen 15, 16 durch eine weitere Gitterlage 32 erbracht werden.

Ein erfindungsgemäßes Betonbauelement weist eine Faser-Bewehrungsstruktur 12 auf, die durch eine Gitteranordnung 15 gebildet wird. Vorzugsweise sind wenigstens einige der in Y- oder Y-Richtung verlaufenden Stäbe als Doppelstäbe mit zusammenhängendem Querschnitt nach Figur 7 oder 9 oder mit voneinander einen Spalt 20 getrennten Teilquerschnitten gemäß Figur 5 ausgebildet. Solche Doppelstäbe können in einer Gitterstruktur sowohl rechtwinklig zueinander als auch in anderen Winkeln, wie z.B. spitzen Winkeln, angeordnet sein, bspw. um eine Dreieckstruktur, eine Sechseckstruktur oder dergleichen als Gitter bereitzustellen.

Faser-Bewehrungsstrukturen 12 dieser Art bestehend aus einem Kunststoff-imprägnierten Fasermaterial, bspw. Epoxydharz gebundenen Glasfasern mit Langfasern (Endlosfasern), in jeweiliger Stablängsrichtung und ohne Bindung untereinander (Rovings), können auf diese Weise einerseits einen ausreichenden krafttragenden Verbund zum Betonkörper 11 aufbauen und somit die Stahlstäbe als Armierung und Bewehrung wirken, wobei andererseits schädliche Wirkungen auf den Beton, insbesondere Keil- und Spaltwirkungen, unterbleiben.

### Bezugszeichenliste:

- 10, 10': Betonbauelement
- 11, 11': Betonkörper
- 12, 12': Faser-Bewehrungsstruktur
- 13, 14: Außenflächen
- 15, 16: Gitteranordnungen 15', 16', 16"
- 17: erste Faserstränge 17a, 17b
- 18: zweite Faserstränge 18a, 18b
- 19: Doppelstab
- 20: Spalt
- 21, 22: Abschnitte
- 23: Taille
- 24: Abstandshalteranordnung
- 25: Gitteranordnung
- 26: Form
- 27: Abschnitte
- 28, 29, 30: Abstandshalter
- 31: Eck-Bewehrungsteil
- 32: Gitterlage

## Patentansprüche

1. Verfahren zur Bereitstellung einer Faser-Bewehrungsstruktur die mehrere in einer ersten Richtung (x) angeordnete erste Faserstränge (17a) und mehrere in einer zweiten Richtung (y) angeordnete zweite Faserstränge (18a) aufweist, die eine erste Gitteranordnung (15, 15') mit Kreuzungspunkten bilden, an denen die ersten Faserstränge (17a) und die zweiten Faserstränge (18a) untereinander verbunden sind, wobei die ersten Faserstränge (17a) und die zweiten Faserstränge (18a) jeweils einen Kunststoffanteil aufweisen, mit weiteren Fasersträngen (17b, 18b, 27, 28), die einen Kunststoffanteil aufweisen, wobei die weiteren Faserstränge (17b, 18b, 27, 28) wenigstens abschnittweise mit den ersten Fasersträngen (17a) und/oder den zweiten Fasersträngen (18a) verbunden sind, wobei die weiteren Faserstränge (17b, 18b, 27, 28) mit den ersten Fasersträngen (17a) und/oder den zweiten Fasersträngen (18a) längs durchgehend verbunden sind oder abschnittsweise Spalte (20) freilassen, wobei die weiteren Faserstränge (17b, 18b, 27, 28) mit den wenigstens abschnittsweise verbundenen ersten Fasersträngen und/oder zweiten Fasersträngen Doppel- oder Mehrfachstäbe mit in dem Doppel- oder Mehrfachstab festgelegtem zusammenhängendem Querschnitt bilden, der mindestens eine Taille festlegt, mit folgenden Verfahrensschritten:
- Bereitstellen von Fasersträngen mit einer Kunststoffimprägnierung,
- Anordnen eines Teils der Faserstränge in einer x-Richtung als erste Faserstränge(17),
- Anordnen eines anderen Teils der Faserstränge in einer y-Richtung schräg oder quer zu den ersten Fasersträngen (17) auf diesen, um eine ebene Gitterstruktur (15) zu bilden,
- Teilhärten der Kunststoffimprägnierung zur Ausbildung einer steifen, handhabbaren Gitterstruktur (15, 15'),
- Erzeugung weiterer Gitterstrukturen (16, 16') Mittels der vorstehenden Schritte,
- Übereinanderlegen von mindestens zwei solcher Gitterstrukturen (15, 16; 15', 16'),
- Ausrichten der Gitterstrukturen (15, 16; 15', 16') zueinander,
- stoffliches Verbinden der Gitterstrukturen (15, 16; 15', 16') miteinander.

2. Verfahren nach Anspruch 1, **dadurch gekennzeichnet, dass** als erste Faserstränge (17) und als zweite Faserstränge (18) solche mit unterschiedlicher Filamentezahl ausgewählt werden.

3. Verfahren nach Anspruch 1 oder 2, **dadurch gekennzeichnet, dass** zwischen den Gitterstrukturen (15', 16') ein gewelltes Gitterelement (25) angeordnet wird, um die Gitterstrukturen (15', 16') stofflich zu verbinden.

4. Verfahren nach Anspruch 3, **dadurch gekennzeichnet, dass** zur Erzeugung des gewellten Gitterelements (25) eine ebene Gitterstruktur in eine Wellenform plastisch umgeformt wird.

## Claims

1. Method for providing a fibre reinforcement structure which comprises several first fibre strands (17a) arranged in a first direction (x) and several second fibre strands (18a) arranged in a second direction (y), which together form a first grid arrangement (15, 15') with crossing points at which the first fibre strands (17a) and the second fibre strands (18a) are connected together, wherein the first fibre strands (17a) and the second fibre strands (18a) each have a plastic proportion,
with further fibre strands (17b, 18b, 27, 28) which have a plastic proportion, wherein the further fibre strands (17b, 18b, 27, 28) at least in portions are connected to the first fibre strands (17a) and/or the second fibre strands (18a), wherein the first fibre strands (17a) and/or the second fibre strands (18a) are connected longitudinally continuously or in portions leave free gaps (20),
wherein the further fibre strands (17b, 18b, 27, 28), together with the first fibre strands and/or the second fibre strands which are connected at least in portions, form double or multiple rods with cohesive cross-section established in the double or multiple rod and defining at least a constriction,
with the following method steps:
- provision of fibre strands with a plastic impregnation;
- arrangement of some of the fibre strands in an x direction as first fibre strands (17),
- arrangement of others of the fibre strands in a y direction, obliquely or transversely to the first fibre strands (17) and arranged thereon, in order to form a flat grid structure (15),
- partial hardening of the plastic impregnation to form a stiff grid structure (15, 15') which can be handled,
- production of further grid structures (16, 16') by means of the above-mentioned steps,
- overlaying of at least two such grid structures (15, 16; 15', 16'),
- orientation of the grid structures (15, 16'; 15', 16') relative to each other,
- substance-bonding of the grid structures (15, 16; 15' 16') to each other.

2. Method according to claim 1, **characterised in that** the first fibre strands (17) and the second fibre strands (18) are selected with different filament counts.

3. Method according to claim 1 or 2, **characterised in that** an undulating grid element (25) is arranged between the grid structures (15', 16') in order to connect the grid structures (15', 16') by substance-bonding.

4. Method according to claim 3, **characterised in that** to produce the undulating grid element (25), a flat grid structure is plastically deformed into a wave form.

## Revendications

1. Procédé de préparation d'une structure de renforcement du type fibres qui présente plusieurs brins de fibre (17a) disposés dans une première direction (x) et plusieurs deuxièmes brins de fibre (18a) disposés dans une deuxième direction (y), qui forment un premier agencement du genre grille (15, 15') comportant des points de croisement, au niveau desquels les premiers brins de fibre (17a) et les deuxièmes brins de fibre (18a) sont reliés les uns aux autres, les premiers brins de fibre (17a) et les deuxièmes brins de fibre (18a) présentant dans chaque cas une part de matière de synthèse, avec d'autres brins de fibre (17b, 18b : 27, 28) qui présentent une part de matière de synthèse, les autres brins de fibre (17b, 18b ; 27, 28) étant reliés au moins par segments aux premiers brins de fibre (17a) et/ou aux deuxièmes brins de fibre (18a), les autres brins de fibre (17b, 18b : 27, 28) étant reliés aux premiers brins de fibre (17a) et/ou aux deuxièmes brins de fibre (18a) sur toute leur longueur, ou laissant libre des intervalles (20), les autres brins de fibre (17a, 18b, 27, 28) formant avec les premiers brins de fibre reliés au moins par segments et/ou les deuxièmes brins de fibre, des barrettes doubles ou multiples, d'une section correspondante fixée dans la barrette double ou multiple, laquelle section détermine au moins une taille, avec les étapes de procédé suivantes :
- Préparation de brins de fibre dotés d'une imprégnation de matière de synthèse,
- Disposition d'une partie des brins de fibre dans une direction (x), considérés comme étant des premiers brins de fibre (17),
- Disposition d'une autre partie des brins de fibre dans une direction (y), obliquement ou transversalement, par rapport aux premiers brins de fibre (17), sur ceux-ci, en vue de réaliser une structure du genre grille (15) plane,
- Durcissement partiel de l'imprégnation de matière de synthèse en vue de réaliser une structure du genre grille (16, 16') rigide et maniable,
- Fabrication d'autres structures du genre grille (16, 16') au moyen des opérations qui précèdent,
- Mise en place les unes au-dessus des autres, d'au moins deux de ces structures du genre grille (15, 16 ; 15', 16'),
- Alignement des structures du genre grille (15, 16 ; 15', 16') les unes par rapport aux autres,
- Liaison par de la matière des structures du genre grille (15, 16 ; 15', 16'), les unes avec les autres.

2. Procédé selon la revendication 1 **caractérisé en ce que** l'on choisit pour les premiers brins de fibre (17) et pour les deuxièmes brins de fibre (18) un nombre de filaments différents.

3. Procédé selon la revendication 1 ou 2 **caractérisé en ce qu'**en vue de relier par la matière les structures du genre grille (15', 16') un élément du genre grille ondulé (25) est disposé entre les structures du genre grille (15', 16').

4. Procédé selon la revendication 3 **caractérisé en ce qu'**en vue de réaliser l'élément du genre grille ondulé (25), une structure du genre grille plane est déformée plastiquement en lui faisant prendre une forme ondulée.
